(19) Europäisches Patentamt European Patent Office Office européen des brevets

(11) **EP 4 130 371 B1**

(12) **EUROPEAN PATENT SPECIFICATION**

(45) Date of publication and mention
of the grant of the patent:
**31.07.2024 Bulletin 2024/31**

(21) Application number: **21776045.3**

(22) Date of filing: **22.02.2021**

(51) International Patent Classification (IPC):
*D04H 3/04* (2012.01)    *D04H 3/115* (2012.01)
*D04H 3/002* (2012.01)    *B32B 5/06* (2006.01)
*B32B 5/12* (2006.01)    *B32B 5/26* (2006.01)
*B29C 70/24* (2006.01)    *B29B 11/16* (2006.01)

(52) Cooperative Patent Classification (CPC):
**D04H 3/04; B29C 70/24; B32B 5/073; B32B 5/12;
B32B 5/26; D04H 3/002; D04H 3/115;** B29B 11/16;
B32B 2250/20; B32B 2260/023; B32B 2260/046;
B32B 2262/106

(86) International application number:
**PCT/JP2021/006531**

(87) International publication number:
**WO 2021/192773 (30.09.2021 Gazette 2021/39)**

(54) **STITCHED REINFORCING-FIBER BASE MATERIAL, PREFORM MATERIAL, FIBER-REINFORCED COMPOSITE MATERIAL, AND PRODUCTION METHOD FOR STITCHED REINFORCING-FIBER BASE MATERIAL, PREFORM MATERIAL, AND FIBER-REINFORCED COMPOSITE MATERIAL**

GENÄHTES VERSTÄRKUNGSFASERBASISMATERIAL, VORFORMMATERIAL, FASERVERSTÄRKTES VERBUNDMATERIAL UND HERSTELLUNGSVERFAHREN FÜR GENÄHTES VERSTÄRKUNGSFASERBASISMATERIAL, VORFORMMATERIAL UND FASERVERSTÄRKTES VERBUNDMATERIAL

MATÉRIAU DE BASE DE FIBRES DE RENFORCEMENT COUSU, MATÉRIAU DE PRÉFORME, MATÉRIAU COMPOSITE RENFORCÉ PAR DES FIBRES ET PROCÉDÉ DE PRODUCTION DE MATÉRIAU DE BASE DE FIBRES DE RENFORCEMENT COUSU, DE MATÉRIAU DE PRÉFORME ET DE MATÉRIAU COMPOSITE RENFORCÉ PAR DES FIBRES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.03.2020 JP 2020058146**

(43) Date of publication of application:
**08.02.2023 Bulletin 2023/06**

(73) Proprietor: **Teijin Limited
Osaka 530-0005 (JP)**

(72) Inventors:
• **AKAMATSU, Tetsuya
Osaka-shi, Osaka 530-0005 (JP)**
• **OSAKI, Kohei
Osaka-shi, Osaka 530-0005 (JP)**
• **KANEKO, Toru
Osaka-shi, Osaka 530-0005 (JP)**

(74) Representative: **Carpmaels & Ransford LLP
One Southampton Row
London WC1B 5HA (GB)**

(56) References cited:
**WO-A1-2017/104481    WO-A1-2018/083734
WO-A1-2020/031834    JP-A- 2012 511 450
JP-A- 2013 522 486**

• **PIERRE-JACQUES LIOTIER ET AL.,
COMPOSITES: PART A, vol. 42, 2011, pages 425
- 437, XP028357726**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

[Technical Field]

The present invention relates to a stitched fiber-reinforced substrate material, a preform material, and a fiber reinforced composite material, and manufacturing methods for the same. More specifically, the present invention relates to a stitched fiber-reinforced substrate material which is formed by integrating a multiple reinforcement fiber layers using stitching yarns, a preform material and a fiber reinforced composite material containing the stitched fiber-reinforced substrate material.

[Background Art]

The fiber reinforced composite material, due to its lightness in weight, high strength, and high rigidity, is used in a wide range of fields, including sports/leisure applications, such as fishing rods and golf shafts, and industrial applications, such as automobiles and aircraft. There is adopted a method for molding a fiber reinforced composite material: molding prepreg (intermediate substrate material) which is formed into a sheet in advance by impregnating a fiber-reinforced substrate material with resin. Other molding methods include a resin transfer molding (RTM) method: impregnating a fiber-reinforced substrate material in a molding die with a liquid resin formulation and curing or solidifying the resin to obtain a fiber reinforced composite material.

Since the fiber reinforced composite material preferably has isotropy, the fiber-reinforced substrate material is preferably composed of a multiple layers having different fiber axial directions. Examples of the fiber-reinforced substrate material composed of a multiple layers include woven or knitted fabrics and multiaxial woven fabrics. The fiber-reinforced substrate material made of such a woven fabric causes the reinforcement fibers to be crimp at the intersection of the warp and the weft and then to lower the linearity, which may result in insufficiently high mechanical properties of the obtained fiber reinforced composite material. On the other hand, in the stitched fiber-reinforced substrate material, since a laminate is made by laminating a multiple reinforcement fiber sheets made of unidirectionally drawn and aligned reinforcement fiber and the laminate is stitched through the laminate in the direction of thickness using a stitching yarn, and thus a multiple reinforcement fiber sheets is integrated, the reinforcement fibers are unlikely to be crimp, and thus the mechanical properties of the obtained fiber reinforced composite material are easily improved.

However, when a fiber reinforced composite material is produced using such a stitched fiber-reinforced substrate material, microcracks may be generated around the stitching yarn. This microcrack may gradually develop and lower the mechanical properties of the fiber reinforced composite material.

Various studies have been made to suppress the generation of this microcrack.

PTL 1 discloses that the formation of microcracks can be suppressed in the obtained fiber reinforced composite material by using a stitching yarn having a small yarn count, specifically 30 dTex or less.

NPL 1 discloses that the formation of microcracks can be suppressed by reducing the resin-rich part in the fiber reinforced composite material as much as possible to improve the toughness of the interface between the stitching yarn and the matrix resin.

However, even if these techniques are used, the effect of suppressing microcracks generated at the interface between the stitching yarn and the matrix resin phase has been still unsatisfactory.

[Summary of Invention]

[Technical Problem]

An object of the present invention is to provide a stitched fiber-reinforced substrate material capable of suppressing the formation of microcracks in a fiber reinforced composite material.

[Solution to Problem]

As a result of studies to solve the above problems, the present inventors have found that many microcracks are generated at the interface between the stitching yarn and the matrix resin phase. Therefore, they examined the stitching yarns constituting the stitched fiber-reinforced substrate material and have found that the formation of microcracks can be reduced by using a stitching yarn such that a composite material using the stitching yarn as the reinforcement fiber exhibits a high in-plane shear strength transition rate, and have completed the present invention.

The present invention that achieves the above object is a stitched fiber-reinforced substrate material formed by stitching reinforcement fiber sheets made of reinforcement fibers using stitching yarns, wherein the stitching yarn exhibits a 5% or more of in-plane shear strength transition rate when the measurement is performed in accordance with a method described later, as defined in claim 1.

In the present invention, the stitching yarn is preferably a stitching yarn having a linear expansion coefficient in the fiber axial direction of $-1 \times 10^{-6}$ to $70 \times 10^{-6}$/K after heated at 180°C for 2 hours and then cooled, and also preferably a stitching yarn to which an organic compound having a polar group is adhered.

In the present invention, the reinforcement fiber sheet is preferably a reinforcement fiber sheet made of unidirectionally drawn and aligned reinforcement fiber, and the reinforcement fiber sheets made of unidirectionally drawn and aligned reinforcement fiber are more preferably laminated layer by layer by altering the fiber axial direction.

The present invention includes a method for manufacturing a stitched fiber-reinforced substrate material by stitching a reinforcement fiber sheet made of reinforcement fiber using stitching yarns exhibiting a 5% or more of in-plane shear strength transition rate when the measurement is performed in accordance with a method described later, as defined in claim 3, and a preform material composed of the stitched fiber-reinforced substrate material of the present invention and a binder resin, and a fiber reinforced composite material composed of the stitched fiber-reinforced substrate material of the present invention and a matrix resin.

[Advantageous Effects of Invention]

The fiber reinforced composite material produced using the stitched fiber-reinforced substrate material of the present invention significantly suppresses the formation of microcracks due to stitching yarn. Therefore, the mechanical properties of the fiber reinforced composite material can be kept high.

[Description of Embodiments]

Hereinafter, the stitched fiber-reinforced substrate material, the preform material, and the fiber reinforced composite material of the present invention, and the manufacturing method thereof will be described.

1. Stitched fiber-reinforced substrate material

The stitched fiber-reinforced substrate material of the present invention is formed by stitching reinforcement fiber sheets using stitching yarns. In the present invention, the stitching yarn is a stitching yarn exhibiting a 5% or more of in-plane shear strength transition rate when the measurement is performed in accordance with a method described later. Use of such a stitching yarn can reduce, at the interface between the single yarn of the stitching yarn and the matrix resin constituting the fiber reinforced composite material, generation of internal stress especially due to thermal shock, and the subsequent interfacial delamination and local stress concentration. Therefore, use of such a stitching yarn in a stitched fiber-reinforced substrate material can suppress the formation of microcracks due to stitching yarn in the obtained fiber reinforced composite material.

The weight per area of the stitched fiber-reinforced substrate material of the present invention is preferably 200 to 2000 g/m$^2$, and more preferably 200 to 1000 g/m$^2$. The thickness of the stitched fiber-reinforced substrate material, though appropriately selected depending on the intended use and the like of the molded product, is usually preferably 0.1 to 2 mm.

1-1. Stitching yarn

The stitching yarn used in the present invention is a stitching yarn exhibiting a 5% or more of in-plane shear strength transition rate when the measurement is performed in accordance with a method described later.

(Measurement method of in-plane shear strength transition rate)

A unidirectional prepreg is produced using an epoxy resin formulation consisting of a glycidylamine type epoxy resin and an aromatic amine-based curing agent as a matrix resin and a stitching yarn as a reinforcing fiber (prepreg prepared by impregnating a fiber substrate material of unidirectionally drawn and aligned stitching yarns with a matrix resin, weight per area of stitching yarn (weight per area of fiber substrate material): 190 g/m$^2$, resin content: 30%, curing temperature: 180°C).

Next, a laminate having a laminate structure $[+45/-45]_{2S}$ is produced using the above-mentioned unidirectional prepreg, and this laminate is molded under the following molding conditions using an autoclave.

[Molding condition]

Pressure: 0.49 MPa
Temperature: 180°C
Curing time: 120 minutes

The obtained molded product is subjected to a tensile test in accordance with ASTM D3518, and the strength of the yield stress is measured as the in-plane shear strength. If there is no yield point, the strength at the fracture point is measured as the in-plane shear strength. The in-plane shear strength transition rate (%) is calculated in accordance with the following formula using the obtained in-plane shear strength and the tensile strength of the stitching yarn measured in accordance with the procedure of ASTM D885.

$$\text{In-plane shear strength transition rate (\%)} = \text{IPSS} \div \text{TS} \times 100$$

IPSS: In-plane shear strength (MPa)
TS: Tensile strength of stitching yarn (MPa)

In the present invention, the in-plane shear strength transition rate is preferably 5 to 20%, and more preferably 10 to 15%. Use of such a stitching yarn allows suppression of the interfacial delamination caused by thermal expansion between the stitching yarn and the resin constituting the fiber reinforced composite material.

Further, the in-plane shear strength of the composite material that is prepared by using the stitching yarn used in the present invention as a reinforcement fiber is preferably 20 to 70 MPa, and more preferably 30 to 50 MPa. The strand strength of the stitching yarn is preferably 50 to 3500 MPa, and more preferably 100 to 1000 MPa, from the viewpoint of ease of stitching of the reinforcement fiber sheet and handleability of the obtained stitched fiber-reinforced substrate material.

The type of fiber used as the stitching yarn in the present invention is not particularly limited, and there is preferably used polyolefin fiber, such as polyethylene fiber and polypropylene fiber, polyamide fiber, such as aliphatic polyamide fiber, semi-aromatic polyamide fiber, and fully aromatic polyamide fiber, polyester fiber, cellulose fiber, and the like. From the viewpoint of heat resistance, a fiber made of an aromatic compound is preferably used, and a fiber made of a fully aromatic compound is more preferably used.

Among these fibers, a fiber having a polar group in the chemical structure of the compound constituting the fiber is preferably used. The fiber having a polar group in the chemical structure has excellent adhesiveness to an epoxy resin, which allows the stitching yarn to exhibit a high in-plane shear strength transition rate. Further, the fiber having a polar group in the chemical structure also has an excellent affinity with the matrix resin, and thus the interfacial delamination between the stitching yarn and the matrix resin is suppressed more easily. As the polar group, hydroxy group, epoxy group, ester group, amino group, amide group, and the like are preferably mentioned. Among these, fibers having a hydroxy group or amide group are particularly preferable. Such a polar group may be contained in the main chain or the side chain of the chemical structure of the compound constituting the fiber, but is preferably contained in the main chain from the viewpoint of easy suppression of the interfacial delamination. It is particularly preferable to use fully aromatic polyamide fibers as the stitching yarn.

Further, it is also preferable to use a fiber having a polar group that is a reactive group such as a hydroxy group, amino group, or epoxy group, as the stitching yarn, because the in-plane shear strength transition rate can be enhanced in this way.

The stitching yarn used in the present invention is preferably a stitching yarn having an amorphous structure on the fiber surface, and is also preferably a stitching yarn having pores on the fiber surface. The amorphous structure and the pore structure on the fiber surface are easily impregnated with the matrix resin, which enhances the interfacial adhesiveness between the stitching yarn and the matrix resin, and the in-plane shear strength transition rate is enhanced easily. Use of such a stitching yarn allows the interfacial delamination between the stitching yarn and the matrix resin to be suppressed easily.

In the present invention, the stitching yarn is preferably a stitching yarn having a linear expansion coefficient in the fiber axial direction of $-1 \times 10^{-6}$ to $70 \times 10^{-6}$/K after heated at 180°C for 2 hours and then cooled, and more preferably $5 \times 10^{-6}$ to $50 \times 10^{-6}$/K. In the present invention, the linear expansion coefficient is a linear expansion coefficient measured in the temperature range of -50 to 70°C. Further, the linear expansion coefficient of the stitching yarn is preferably equal to or less than the linear expansion coefficient of the matrix resin (CTEm ($\times 10^{-6}$/K)) to be combined when forming the fiber reinforced composite material, and is preferably set to in the range of CTEm ($\times 10^{-6}$/K) to (CTEm - 30) ($\times 10^{-6}$/K). Further, the linear expansion coefficient of the stitching yarn is also preferably equal to or more than the linear expansion coefficient in the fiber direction of the reinforcement fiber (CTEf ($\times 10^{-6}$/K)) used for the reinforcement fiber sheet, and is preferably set to in the range of CTEf ($\times 10^{-6}$/K) to (CTEf + 30) ($\times 10^{-6}$/K).

When a stitching yarn having such a linear expansion coefficient is used, the difference in the volume change due to thermal expansion between the stitching yarn and the matrix resin phase is small, which makes it unlikely to cause generation of internal stress and interfacial delamination at the interface between the stitching yarn and the matrix resin phase. Use of the stitching yarn having such a linear expansion coefficient allows further suppression of the interfacial delamination between the stitching yarn and the resin constituting the fiber reinforced composite material.

The linear expansion coefficient of the stitching yarn can be adjusted by the linear expansion coefficient characteristic to the material of the fiber to be used, and the drawing treatment or heat treatment applied to the fiber when the fiber is manufactured. When using a fiber having a glass transition temperature (Tg) or a softening point of 180°C or less as the stitching yarn of the present invention, the fiber is preferably selected so that the linear expansion coefficient characteristic to the fiber is within a desired range because the selection facilitates adjusting the linear expansion coefficient of the stitching yarn within the desired range. On the other hand, when using a fiber having a Tg or a softening point of over 180°C or a fiber having no Tg as the stitching yarn, the linear expansion coefficient can be adjusted to be a desired value by the drawing treatment or heat treatment when the fiber is manufactured.

The fineness of the stitching yarn, though not particularly specified, is preferably 10 to 70 dTex, and more preferably 15 to 40 dTex. The single yarn diameter of the stitching yarn is preferably 10 to 40 $\mu$m. The number of filaments in the stitching yarn is preferably 1 to 50 and more preferably 4 to 24.

In the present invention, the stitching yarn is formed by imparting an organic compound having a polar group to a fiber that does not contain a fiber oiling agent or a fiber from which the oiling agent has been removed. Here, the condition that the stitching yarn does not contain the fiber oiling agent means that the adhered amount of the oiling agent other than the organic compound having a polar group is 1% by mass or less. The polar group contained in the organic compound having a polar group is appropriately selected in consideration of affinity with the matrix resin, and is selected from hydroxy group, amino group, phenol group, lactam group, and epoxy group. When a curable resin is used as the matrix resin, the polar group is preferably a polar group that reacts with the matrix resin at curing to form a covalent bond.

Too high reactivity of the polar group may impair stability as a treatment agent for applying the organic compound to the fiber, and thus the polar group is more preferably a hydroxy group, phenol group or epoxy group. When the stitching yarn is used in combination with an epoxy resin as a matrix resin for a composite material, the polar group is particularly preferably an epoxy group. Examples of the organic compound having an epoxy group as a polar group include an aromatic epoxy compound having an aromatic group and an aliphatic epoxy compound consisting only of an aliphatic group, and, in the present invention, one kind or a plurality of kinds of aliphatic compounds is preferably used. Examples of the aliphatic epoxy compound include glycidyl ether compound, obtained by reacting an aliphatic alcohol or an aliphatic polyol with epihalohydrin, such as monoglycidyl ether compound, diglycidyl ether compound, and polyglycidyl ether compound.

When an epoxy resin is used as a matrix resin, an epoxy adhesive oiling agent having high adhesiveness to the epoxy resin is preferably used as an organic compound having a polar group. As the epoxy adhesive oiling agent, an organic compound having a polyoxyalkylene structure is preferably used.

When an organic compound having a polar group is applied to the stitching yarn, the adhered amount thereof is preferably 1 to 10 wt%.

Further, a hydrophilic treatment is also preferably performed on the stitching yarn to improve hydrophilicity of the surface of the fiber and thus improve adhesiveness with the matrix resin. Examples of the hydrophilic treatment include corona treatment and plasma treatment.

Use of such a stitching yarn can further suppress the interfacial delamination between the stitching yarn and the resin, and further suppress the generation of microcracks.

The stitched fiber-reinforced substrate material of the present invention preferably uses the stitching yarn at an amount of preferably 1 to 10 g/m$^2$, and more preferably 2 to 5 g/m$^2$.

The stitching yarn as described above can be manufactured, for example, as follows. An example of the case of using the fully aromatic polyamide fiber as the stitching yarn will be described, but this does not limit the stitching yarn of the present invention.

< Fully aromatic polyamide>

A fully aromatic polyamide is a polymer in which one kind or more of divalent aromatic groups are directly linked by an amide bond. The aromatic group includes those in which two aromatic rings are bonded via oxygen, sulfur, or an alkylene group, or those in which two or more aromatic rings are directly bonded. Further, these divalent aromatic groups may contain a lower alkyl group, such as methyl group and ethyl group, methoxy group, and a halogen group, such as chloro group, and the like. As the fully aromatic polyamide used for the stitching yarn of the present invention, a para-type fully aromatic polyamide can be particularly preferably used, in which the position of the amide bond directly connecting the divalent aromatic groups is para-type. The amount of para-type fully aromatic polyamide contained in the stitching yarn is preferably 90% by mass or more, more preferably 95% by mass or more, and most preferably 100% by mass, with respect to the total mass of the stitching yarn.

The fully aromatic polyamide used for the stitching yarn may be a homopolyamide or a copolyamide. The fully aromatic polyamide can be produced in accordance with a known conventional method. For example, a polymer solution of an aromatic polyamide can be obtained by reacting an aromatic dicarboxylic acid chloride component with an aromatic diamine component in an amide-based polar solvent.

The aromatic dicarboxylic acid chloride component is not particularly limited, and a generally known one can be used. For example, terephthaloyl chloride, 2-chloroterephthaloyl chloride, 2,5-dichloroterephthaloyl chloride, 2,6-dichloroterephthaloyl chloride, 2,6-naphthalenedicarboxylic acid chloride and the like can be mentioned. Further, these aromatic dicarboxylic acid dichlorides can be used as one kind and two or more kinds, and the composition ratio thereof is not particularly limited. Among these, terephthaloyl dichloride is preferable from the viewpoint of versatility and mechanical properties of the obtained fiber.

The aromatic diamine component used as a raw material for the fully aromatic polyamide is not particularly limited, and a generally known one can be used. For example, p-phenylenediamine, m-phenylenediamine, 2-chloro-p-phenylenediamine, 2,5-dichloro-p-phenylenediamine, 2,6-dichloro-p-phenylenediamine, 3,4'-diaminodiphenyl ether, 4,4'-diaminodiphenyl ether, 4,4'-diaminodiphenylmethane, 4,4'-diaminodiphenyl sulfone and the like can be mentioned. These can be used as one kind and two or more kinds, and the composition ratio thereof is not particularly limited.

Among these, from the viewpoint of the mechanical strength of the obtained fiber, there is preferably used a para-aromatic diamine component, more preferably p-phenylenediamine and 3,4'-diaminodiphenyl ether singly or in combination, and most preferably a copolymerized aromatic polyamide as combination of p-phenylenediamine and 3,4'-diaminodiphenyl ether. When p-phenylenediamine and 3,4'-diaminodiphenyl ether are used in combination, the composition ratio is not particularly limited, but is preferably 25 to 75 mol% and 75 to 25 mol%, respectively, more preferably 40 to 60 mol% and 60 to 40 mol%, respectively, and most preferably 45 to 55 mol% and 55 to 45 mol%, respectively, with respect to the total amount of aromatic diamine.

As the fully aromatic polyamide used in the stitching yarn of the present invention, copolyparaphenylene 3,4'-oxydiphenylene terephthalamide and polyparaphenylene terephthalamide are most preferable.

<Manufacturing method of fully aromatic polyamide fiber>

As the method for manufacturing the fully aromatic polyamide fiber, a wet spinning method or a semi-dry and semi-wet spinning method is adopted. A spinning solution containing a fully aromatic polyamide and a solvent is discharged from a spinneret to form a coagulated yarn. Then, the solvent contained in the coagulated yarn is removed, and in the subsequent step, the yarn was drawn without exceeding a specific draw ratio to obtain a final fiber, which enables to obtain a fully aromatic polyamide fiber exhibiting an excellent in-plane shear strength transition rate.

Hereinafter, the manufacturing method will be described for each step regarding the case in which a para-type fully aromatic polyamide is used as the fully aromatic polyamide.

[Spinning solution (polymer dope) preparing step]

In order to obtain the para-type fully aromatic polyamide fiber, first, in the spinning solution preparing step, the spinning solution containing the para-type fully aromatic polyamide and the solvent is prepared. The method for preparing the spinning solution containing the para-type fully aromatic polyamide and the solvent is not particularly limited. Examples of the solvent used for preparing the spinning solution include organic polar amide solvents such as N,N-dimethylformamide, N,N-dimethylacetamide, N-methyl-2-pyrrolidone (hereinafter, may be referred to as NMP), and N-methyl caprolactam, water-soluble ether compounds such as tetrahydrofuran and dioxane, water-soluble alcohol compounds such as methanol, ethanol and ethylene glycol, water-soluble ketone compounds such as acetone and methyl ethyl ketone, water-soluble nitrile compound such as acetonitrile and propionitrile, and the like. The solvent used may be one type alone or a mixed solvent of two or more types. The polymer solution obtained when producing the para-type fully aromatic polyamide can be used for the spinning solution without isolating the polymer.

Further, for the purpose of imparting functionality to the fiber, other optional components, such as additives, may be blended within a range not exceeding the gist of the present invention. The polymer concentration in the spinning solution is preferably in the range of 0.5 to 30% by mass, and more preferably in the range of 1 to 20% by mass.

[Spinning/coagulating step]

The spinning solution obtained above is discharged from the spinneret and coagulated by passing through the coagulation liquid to obtain the coagulated yarn. In the spinning, the spinning solution may be directly discharged into the coagulation bath, or discharged into the coagulation bath through an air gap which is provided with air or an inert gas. When the temperatures of the spinneret and the coagulation liquid are significantly different, it is preferable to perform semi-dry and semi-wet spinning with an air gap. The length of the air gap is not particularly limited, but is preferably in the range of 5 to 15 mm from the viewpoint of temperature controllability, spinnability and the like.

As the coagulation liquid to be filled in the coagulation bath, a poor solvent for aromatic polyamide is generally used. At this time, in order to prevent the condition in which the solvent is released too rapidly from the aromatic polyamide dope to generate defects in the coagulated yarn formed, a good solvent is preferably added to adjust the coagulation rate. It is preferable to use water as the poor solvent and a solvent for aromatic polyamide dope as the good solvent. The composition ratio of the good solvent/poor solvent may be appropriately selected depending on the solubility and coagulability of the aromatic polyamide used, and is generally preferably in the range of 15/85 to 40/60.

The temperature of the coagulation liquid is not particularly limited, and can be appropriately set depending on the composition of the coagulation liquid and the solubility and coagulability of the aromatic polyamide used.

[Water-washing step]

Next, the coagulated yarn obtained above is water-washed. The water-washing step aims to diffuse the solvent contained in the yarn into water and remove the solvent from the yarn.

Inorganic fine particles may also be added to the yarn after water-washing for the purpose of suppressing fusion of the single fibers in the subsequent drying step. The type and adhered amount of the inorganic fine particles to be applied are not particularly limited as long as the fusion between the single fibers can be suppressed. Further, the inorganic fine particles adhered here can be removed by spraying a water shower or compressed air in a later removing step.

[Drawing process]

The coagulated yarn obtained above is drawn to give orientation to the fibers, which allows the obtained aromatic polyamide fiber to have improved mechanical strength. The timing of drawing is not particularly limited, and the yarn in the coagulated state may be subjected to water-washing drawing, boiling water drawing, or the like immediately after the spinning/coagulating step.

[Drying step]

Next, in the drying step, the water-washed fibers are dried. The drying conditions are not particularly limited, and there is no problem as long as the conditions allow the moisture adhered to the fibers to be removed sufficiently, but the temperature is preferably in the range of 150 to 250°C in consideration of workability and deterioration of the fibers due to heat. Further, in the drying treatment, either a contact type drying device such as a roller, or a non-contact type drying device such as passing fibers through a drying furnace can be used.

The stitching yarn used in the present invention is preferably subjected to drawing at a draw ratio in the range of 0.98 to 3.0 times from the coagulating step to the drying step. The draw ratio in such a range enables the fully aromatic polyamide fiber to exhibit an excellent in-plane shear strength transition rate.

[Hot drawing step]

In the hot drawing step, the coagulated yarn is dried to obtain a dried yarn, and then the yarn in the dried state may be subjected to a hot drawing within a range not hindering the present invention. The temperature of the hot drawing depends on the polymer structure of the para-type fully aromatic polyamide, but is preferably 300°C or higher and 550°C or lower. Further, the draw ratio is preferably 5 times or less, and more preferably 3 times or less. The draw ratio has no particular lower limit, and the drawing step may be performed only by using heat treatment without drawing. At the stage of the coagulated yarn which may be undrawn or may have been drawn, the fibers are not fully oriented yet. Performing hot drawing on the dried yarn can allow the aromatic polyamide forming the fiber to be oriented and crystallized.

[Crimping step]

Further, the fully aromatic polyamide fiber may be crimped as necessary in the present invention. The method of subjecting to crimping is not particularly limited, and a known method, such as false twist, can be adopted.

[Oiling agent application/winding step]

Then, an oiling agent is applied, as necessary, to the fibers for the purpose of suppressing static charge and imparting lubricity, and finally the fibers are wound using a winder. The type, amount, and the like of the oiling agent to be applied are not particularly limited, and known methods can be adopted as it is. An organic compound having a polar group, more preferably an organic compound having an epoxy group as a polar group, and particularly preferably an oiling agent containing an aliphatic epoxy compound is applied to the stitching yarn used in the present invention.

The stitching yarn used in the present invention is preferably subjected to drawing at a total draw ratio in the range of 0.98 to 3.0 times throughout the all steps. The draw ratio in such a range enables the fully aromatic polyamide fiber to exhibit an excellent in-plane shear strength transition rate. Further, the stitching yarn in the present invention is preferably a fully aromatic polyamide fiber having an equilibrium moisture regain of 1 to 10 wt%, and more preferably 3 to 5 wt%.

1-2. Reinforcement fiber sheet

For the reinforcement fiber sheet used in the present invention, there can be used materials used for ordinary fiber reinforced material, such as carbon fiber, glass fiber, aramid fiber (aromatic polyamide fiber), boron fiber, and metal fiber. Among these, carbon fiber is preferable. Further, as the reinforcement fiber used in the present invention, a reinforcement fiber having a linear expansion coefficient (CTEF) in the fiber direction in the range of $-10 \times 10^{-6}$ to $10 \times 10^{-6}$/K is preferably used.

In the present invention, as the reinforcement fiber sheet, a reinforcement fiber sheet obtained by processing a continuous fiber bundle of reinforcement fiber into a sheet shape is used. The reinforcement fiber sheet is composed of unidirectionally drawn and aligned reinforcement fiber. In this reinforcement fiber sheet (laminate substrate material) reinforcement fiber sheets made of unidirectionally drawn and aligned reinforcement fiber are laminated layer by layer by altering the fiber axial direction. Although the reinforcement fibers constituting the reinforcement fiber sheet may be partially cut by making a notch and the like in the sheet in order to enhance shapeability of the sheet when molding the composite material, the reinforcement fiber is still used preferably in a continuous-fiber state from the viewpoint of improving the physical properties of the obtained composite material. Even when the reinforcement fiber is cut and used, the fiber length of the reinforcement fiber is preferably maintained at 10 cm or more.

The laminate structure of the reinforcement fiber sheets is such that the sheets are laminated layer by layer by altering the fiber axial direction of the reinforcement fiber, and preferably laminated by altering the fiber axial direction to an appropriately selected angle from 0°, ± 45°, and 90°. These angles mean that the fiber axial directions of thread line of the reinforcement fiber are at 0°, ±45°, and 90° with respect to a predetermined direction of the stitched fiber-reinforced substrate material, respectively. The reinforcement fiber sheet is particularly preferable to have a laminate structure of -45°, 0°, +45°, 90°, 90°, +45°, 0°, -45°. Lamination at such angles can enhance isotropy of the obtained fiber reinforced composite material. The number of lamination of reinforcement fiber sheets is not limited, but is preferably about 2 to 8 layers.

The stitched fiber-reinforced substrate material of the present invention is given by stitching the above reinforcement fiber sheet using stitching yarns. The stitching method of the stitched fiber-reinforced substrate material is not particularly limited, but preferably, a multiple reinforcement fiber sheets is stitched up using the stitching yarns, and more preferably, all the reinforcement fiber sheets are stitched and integrated using the stitching yarns.

Each reinforcement fiber sheet used in the present invention is preferably composed of only a thread line of unidirectionally drawn and aligned reinforcement fiber, and no other thread line (weft) is preferably used in the direction other than the unidirection. Unidirectional drawing and aligning of the reinforcement fiber improves linearity of thread line of the reinforcement fiber, and thus improves the mechanical properties of the obtained fiber reinforced composite material. Further, after the fiber reinforced composite material is formed, generation of the resin-rich part is suppressed, and thus formation of microcracks is easily suppressed.

In the stitched fiber-reinforced substrate material of the present invention, a binder resin for forming a preform may be adhered on the surface of the reinforcement fiber sheet, and a resin sheet, non-woven fabric, or the like may be further laminated.

The stitched fiber-reinforced substrate material of the present invention can be manufactured by stitching the reinforcement fiber sheet described above using a stitching yarn which exhibits an in-plane shear strength transition rate of 5% or more.

2. Preform material

When the fiber reinforced composite material is molded using the stitched fiber-reinforced substrate material of the present invention, the stitched fiber-reinforced substrate material can be used as it is, but, from the viewpoint of handleability and workability, there is preferably used a preform material that is obtained by stacking the stitched fiber-reinforced substrate material and pre-shaping the stack.

The preform material is manufactured by the following process: the stitched fiber-reinforced substrate material of the present invention, or the stitched fiber-reinforced substrate material of the present invention and another fiber-reinforced substrate material are stacked on one face of the preform production die to a desired thickness, a powder of a resin (binder resin) to be a binder is sprayed or a resin sheet of a binder resin is laminated as necessary, and the stack is preformed by heating under pressure by a press or the like which uses a heating plate or the like. The resin to be a binder is melted by heating, and the stitched fiber-reinforced substrate materials of the present invention among themselves, or the stitched fiber-reinforced substrate material of the present invention and another reinforcement fiber sheet are molded together after the preforming die to give a preform material retaining the shape of the preforming die.

The resin material used as the binder resin is not particularly limited, and thermosetting resins, such as epoxy resin and vinyl ester resin, thermoplastic resins, such as polyamide and polyethersulfone, and mixtures thereof can be appropriately used. These resins may be used by spraying powder, or may be formed as a sheet, non-woven fabric, or the like and laminated on the stitched fiber-reinforced substrate material of the present invention. Alternatively, it may be adhered in advance to each thread line of the reinforcement fiber constituting the stitched fiber-reinforced substrate material of the present invention.

The amount of the binder resin constituting the preform material is 5 to 10 parts by mass with respect to 100 parts by mass of the stitched fiber-reinforced substrate material of the present invention. The thickness of the preform material varies depending on the purpose of use, but is preferably 1 to 40 mm.

The preform material can be made into a fiber reinforced composite material by a known molding method, such as a resin transfer molding method (RTM method) or a resin film infusion molding method (RFI method). The preform material produced by the above methods retains its three-dimensional shape even after preforming. Therefore, the preform material can be moved from the preform production die to the fiber reinforced composite material production die without losing the shape. Accordingly, there is no need of stacking directly on the molding die used for production of the fiber reinforced composite material, which can reduce the occupancy time of the molding die, and thus productivity of the fiber reinforced composite material is improved.

3. Fiber reinforced composite material (FRP)

The fiber reinforced composite material of the present invention comprises the stitched fiber-reinforced substrate material of the present invention and a matrix resin formulation. The fiber reinforced composite material of the present invention is produced by impregnating the stitched fiber-reinforced substrate material of the present invention with the matrix resin composition and molding the stitched substrate material and the matrix resin formulation while they are in a composite state. The method for producing the fiber reinforced composite material is not particularly limited, and there may be molded a prepreg in which a matrix resin formulation is impregnated in advance into a fiber-reinforced substrate material, and the fiber-reinforced substrate material and the matrix resin formulation may be simultaneously molded and composited using a resin transfer molding method (RTM method), a resin film infusion molding method (RFI method) or the like. The stitched fiber-reinforced substrate material of the present invention can be preferably used in a molding method such as RTM method and RFI method. The linear expansion coefficient of the matrix resin (CTEm) is preferably $40 \times 10^{-6}$ to $70 \times 10^{-6}$/K.

As the matrix resin used in the present invention, a thermosetting resin or a thermoplastic resin is used. Specific examples of the thermosetting matrix resin include epoxy resin, unsaturated polyester resin, phenol resin, melamine resin, polyurethane resin, silicone resin, maleimide resin, vinyl ester resin, cyanate ester resin, resin prepolymerized from maleimide resin and cyanate ester resin, urethane acrylate resin, phenoxy resin, alkyd resin, urethane resin, bismaleimide resin, polyimide resin and polyisoimide resin having an acetylene terminal, and polyimide resin having a nadic acid terminal. These can also be used as one kind or a mixture of two or more kinds. Among these, epoxy resin, vinyl ester resin, bismaleimide resin, and polyimide resin which have excellent heat resistance, elastic modulus, and chemical resistance are particularly preferable. In addition to the curing agent and the curing accelerator, these thermosetting resins may contain commonly used colorants, various additives, and the like. In order to improve the impact resistance of the matrix resin, a thermoplastic resin is preferably contained.

Examples of the thermoplastic resin used as the matrix resin include polypropylene, polysulfone, polyethersulfone, polyetherketone, polyetheretherketone, polyetherketoneketone, aromatic polyamide, aromatic polyester, aromatic polycarbonate, polyetherimide, polyarylene oxide, thermoplastic polyimide, polyamide, polyamideimide, polyacetal, polyphenylene sulfide, polyarylate, polyacrylonitrile, and polybenzimidazole.

The fiber reinforced composite material of the present invention is produced preferably using RTM method from the viewpoint of efficient production for a complicated-shaped fiber reinforced composite material. Here, RTM method means the following method: the stitched fiber-reinforced substrate material is placed in the molding die, then impregnated with an uncured thermosetting resin formulation in liquid state or a molten thermoplastic resin formulation as a matrix resin, and then the matrix resin is cured or solidified to obtain fiber reinforced composite material.

In the present invention, the mold used in RTM method may be a closed mold made of a rigid material, or an open mold made of a rigid material and a flexible film (bag) can also be used. In the latter case, the stitched fiber-reinforced substrate material can be placed between the open mold of the rigid material and the flexible film. As the rigid material, there are used various existing materials including metal, such as steel and aluminum, fiber reinforced plastic (FRP), wood, and gypsum. Polyamide, polyimide, polyester, fluororesin, silicone resin and the like are used as material of the flexible film.

In RTM method, when a closed mold of a rigid material is used, the mold is usually pressed and clamped, and then the matrix resin formulation is pressurized and injected. At this time, a suction port may be provided in addition to the injection port and connected to a vacuum pump for suction. The matrix resin formulation may be injected only by atmospheric pressure due to suction without use of special pressurizing means. This method can be suitably used to manufacture a large-sized member by providing a plurality of suction ports.

In RTM method, when an open mold of a rigid material and a flexible film are used, the matrix resin formulation may be injected only by atmospheric pressure due to suction without use of special pressurizing means. A resin distribution medium is effectively used to realize good impregnation for injection only by atmospheric pressure. Further, a gel coat is preferably applied to the surface of the rigid material before placing the stitched fiber-reinforced substrate material.

In RTM method, when a thermosetting resin is used as the matrix resin, the stitched fiber-reinforced substrate material is impregnated with the matrix resin formulation and then heat-cured. The mold temperature at heat curing is usually selected to be higher than that at injecting the thermosetting resin formulation. The mold temperature at heat curing is preferably 80 to 200°C. The heat curing time is preferably 1 minute to 20 hours. After the heat curing is completed, the fiber reinforced composite material is demolded and taken out. Then, the obtained fiber reinforced composite material may be heated at a higher temperature for postcure. The postcure temperature is preferably 150 to 200°C, and the time is preferably 1 minute to 4 hours.

When an epoxy resin is used as the matrix resin, the impregnation pressure for impregnating the epoxy resin formulation into the stitched fiber-reinforced substrate material by RTM method is appropriately determined in consideration of the viscosity/resin flow and the like of the resin formulation. The specific impregnation pressure is 0.001 to 10 MPa and preferably 0.01 to 1 MPa. When the fiber reinforced composite material is obtained by RTM method, the viscosity of the epoxy resin formulation at 100°C is preferably less than 5000 mPa·s, and more preferably 1 to 1000 mPa·s.

The amount of the matrix resin formulation is preferably 20 to 60 parts by mass and more preferably 30 to 40 parts by mass with respect to 100 parts by mass of the stitched fiber-reinforced substrate material.

In the present molding method, the viscosity of the matrix resin formulation is preferably 0.01 to 1 Pa s at the injection temperature. The viscosity at injection of the resin to be injected is preferably adjusted within the above range by a method such as preheating.

The fiber reinforced composite material thus obtained preferably has a lower crack density. Specifically, the crack density is more preferably 0.20 cracks/(cm ply) or less, and further preferably 0.15 cracks/(cm·ply) or less.

[Examples]

Hereinafter, the present invention will be described in more detail by way of examples, but the present invention is not limited to the examples. The components and test methods used in this example and comparative example are described below.

[Stitching yarn]

- Stitching yarn 1: Aromatic copolymerized polyamide fiber obtained in production example 1 below, In-plane shear strength transition rate: 12.6%, Fineness: 33 dTex, Number of single filaments: 1, Linear expansion coefficient: $-0.1 \times 10^{-6}$/K
- Stitching yarn 2: Aromatic copolymerized polyamide fiber manufactured by Teijin Limited, Technora (registered trademark), 33T10, In-plane shear strength transition rate: 1.4%, Fineness: 33 dTex, Number of single filaments: 10, Linear expansion coefficient: $-5 \times 10^{-6}$/K

[Production example 1] Production of stitching yarn 1

Paraphenylenediamine (50 parts by mass) and 3,4'-diaminodiphenyl ether (50 parts by mass) were dissolved in NMP, terephthaloyl dichloride (100 parts by mass) was added thereto, and the mixture was subjected to a polycondensation reaction to obtain a polymer solution of 3,4'-oxydiphenylene terephthalamide. At this time, the polymer concentration was 6% by mass, and the intrinsic viscosity (IV) of the polymer was 3.38.

After heating the spinneret with a hole diameter of 0.3 mm to 105°C, the polymer solution obtained above heated to 105°C was discharged from the spinneret and through a 10 mm air gap, and passed through a coagulation bath filled with 30% by mass NMP aqueous solution at 50°C to obtain a fiber bundle of the coagulated polymer.

Next, the fiber bundle after coagulation was water-washed by passing through a water-washing bath adjusted to 50°C, dried with a drying roller at 200°C, and then wound on a paper tube using a winder to obtain a para-type fully aromatic copolyamide fiber of 1000 filaments.

[Reinforcement fiber]

As reinforcement fiber, carbon fiber strand "Tenax (registered trademark)" HTS40-12K (manufactured by Teijin Limited, Tensile strength 4.2 GPa, Tensile elastic modulus 240 GPa, Linear expansion coefficient: -0.5×10⁻⁶/K) was used.

[Liquid thermosetting matrix resin formulation]

An amine-curable epoxy resin was used as the matrix resin for the carbon fiber composite material. The formulation is as follows. The linear expansion coefficient of the cured product was $55\times10^{-6}$/K.

(Epoxy resin)

- Tetraglycidyl-4,4'-diaminodiphenylmethane (Araldite (registered trademark) MY721 manufactured by Huntsman Japan KK) 20 parts by mass
- Triglycidyl-p-aminophenol (Araldite (registered trademark) MY0510 manufactured by Huntsman Japan KK) 30 parts by mass
- Triglycidyl-m-aminophenol (Araldite (registered trademark) MY0610 manufactured by Huntsman Japan KK) 30 parts by mass
- Bisphenol-F diglycidyl ether based epoxy resin (Araldite (registered trademark) PY306 manufactured by Huntsman Japan KK) 20 parts by mass

(Curing agent)

- 4,4'-diamino-3,3'-diisopropyl-5,5'-dimethyldiphenylmethane (Lonzacure (registered trademark) M-MIPA manufactured by Lonza Japan Co., Ltd.) 67 parts by mass

[Evaluation method]

(1) Fiber fineness

The obtained fiber was wound up to 100 m using a sizing reel, and the mass was measured. The obtained mass was multiplied by 100 to calculate the mass per 10000 m, and the value was taken as fineness (dtex).

(2) Tensile strength of stitching yarn

The tensile strength of the stitching yarn was measured by a tensile tester (manufactured by INSTRON, trade name: INSTRON, model: 5565 type) using a thread test chuck based on the procedure of ASTM D885 under the following conditions.

[Measurement condition]

Temperature: Room temperature
Specimen: 75 cm
Test speed: 250 mm/min
Distance between chucks: 500 m

(3) In-plane shear strength transition rate

The in-plane shear strength transition rate of the stitching yarn was measured by the following method. A measurement sample of a fiber composite material composed of stitching yarn and epoxy resin was produced by using an autoclave molding method. That is, a plurality of stitching yarns was unidirectionally drawn and aligned so as to have a weight per area of 190 g/m² to obtain a fiber sheet. Next, an epoxy resin formulation containing a glycidylamine type epoxy resin and an aromatic amine-based curing agent was prepared by mixing the following components.

(Epoxy resin formulation)

(Epoxy resin)

- Triglycidyl-m-aminophenol (Araldite (registered trademark) MY600 manufactured by Huntsman Japan KK) 50 parts by mass
- Tetraglycidyl-4,4'-diaminodiphenylmethane (Araldite (registered trademark) MY721 manufactured by Huntsman Japan KK) 50 parts by mass

(Epoxy resin curing agent)

- 3,3'-Diaminodiphenyl sulfone (manufactured by Konishi Chemical Ind. Co., Ltd.) 45 parts by mass

(Thermoplastic resin for viscosity adjustment)

- Polyether sulfone resin (SUMIKAEXCEL PES-5003P manufactured by Sumitomo Chemical Co., Ltd.) 10 parts by mass

The obtained epoxy resin formulation was applied onto a release paper using a knife coater to prepare a resin film. Next, two sheets of the resin film were layered on both sides of the fiber sheet made of stitching yarn, heated and pressed at 90°C to impregnate the resin formulation, and thus unidirectional prepreg (curing temperature 180°C, resin content 30%) was produced.

The obtained prepreg was cut and laminated to obtain a laminate having a laminate structure [+45/-45]$_{2S}$. This laminate was molded by an autoclave molding method. The molding conditions were such that molding was performed under a pressure of 0.49 MPa at a temperature of 180°C for 120 minutes. The obtained molded product was cut into a size of 25 mm in width × 230 mm in length, and the strength of the yield stress was measured in accordance with ASTM D3518 as the in-plane shear strength. When there was no yield point, the strength at the fracture point was measured as the in-plane shear strength.

The in-plane shear strength transition rate (%) was calculated by dividing the in-plane shear strength by the tensile strength of the stitching yarn according to the following formula.

$$\text{In-plane shear strength transition rate (\%)} = \text{IPSS} \div \text{TS} \times 100$$

IPSS: In-plane shear strength (MPa)
TS: Tensile strength of stitching yarn (MPa)

(4) Linear expansion coefficient

After the fiber sample was heated at 180°C for 2 hours while preventing tension to be applied on the sample and then cooled, the linear expansion coefficient in the line axial direction was measured by a thermomechanical analysis apparatus (TA Instruments model: TMA Q400).

[Measurement condition]

Ramp start temperature: -60°C
Measurement temperature range: -50 to 70°C
Ramp end temperature: 100°C
Temperature ramp rate: 5°C/min
Load: 0.0001 N

(5) Thermal shock test

A thermal shock tester (TSA-73EH-W manufactured by ESPEC CO., LTD.) was used to subject the fiber reinforced composite material to 1000 times of thermal cycles. One cycle of the thermal cycle was set to consist of a flat range at -55°C for 15 minutes, followed by a ramp range reaching 70°C for 15 minutes, a flat range at 70°C for 15 minutes, and then a ramp range going back to -55°C for 15 minutes, which cycle was repeated 1000 times.

(6) Crack density

The number of cracks after the thermal shock test in the cross section inside the fiber reinforced composite material test piece was measured by microscopic observation. VHX-5000 manufactured by KEYENCE CORPORATION was used as a microscope for observation at a magnification of 200 times. Specifically, the test piece (width 80 mm $\times$ length 50 mm $\times$ thickness 5 mm) after the thermal shock test was cut into four equal parts of width 40 mm $\times$ length 25 mm, and the cut surface in the thickness direction was mirror-polished to give an observation surface for each of the long side and the short side. The microcracks are observed using a microscope in an observation range of 50 mm$^2$ or more, and the number of cracks measured is divided by the number of layers and the width of the observation surface to give the value of crack density. The unit of crack density is cracks/(cm .ply). The crack density values obtained from the observations on the long and short sides were averaged to give the final crack density.

[Example 1]

Stitching yarn 1 was used as the stitching yarn. The stitching yarn was washed with an organic solvent to remove the fiber oiling agent adhering to the surface of the stitching yarn. The stitching yarn was washed by circulation washing for 12 hours using a Soxhlet extractor and a mixed solution of ethanol and benzene as an organic solvent. The stitching yarn after washing was dried in a vacuum dryer for 12 hours.

Then, the stitching yarn from which the fiber oiling agent was removed was continuously immersed in the treatment agent solution to apply the treatment agent. Used as the treatment agent solution was a 5 wt% aqueous solution of aliphatic epoxy compound "Denacol" (registered trademark) EX832 (polyoxyethylene diglycidyl ether manufactured by Nagase ChemteX Corporation, Number of epoxy groups: 2, Epoxy equivalent: 284 g/Eq) (weight ratio of polyoxyethylene diglycidyl ether/water = 1:19). After removing excess water with a roller, the stitching yarn provided with a treatment agent solution was dried at 100°C for 1 hour using a hot air dryer.

Four reinforcement fiber sheets with 200 reinforcement fibers unidirectionally drawn and aligned were prepared and laminated by altering angles in the order of -45°, 0°, +45°, 90° to give a laminate sheet of laminated four unidirectionally drawn and aligned reinforcement fiber sheets. Next, the laminate sheet was sewn (stitched) through the laminate sheet using a stitching yarn provided with a treatment agent to give a stitched fiber-reinforced substrate material (reinforcement fiber weight per area per layer: 190 g/m$^2$, stitching yarn usage amount: 4 g/m$^2$, stitched fiber-reinforced substrate material total weight per area: 764 g/m$^2$).

The obtained stitched fiber-reinforced substrate material was cut into a size of 300$\times$300 mm. Next, six stitched fiber-reinforced substrate materials were laminated on a mold release treated aluminum plate of 500$\times$500 mm to form a laminate (preform material [-45°/ 0°/ +45°/ 90°]$_{3s}$).

Then, using the obtained laminate and the liquid thermosetting resin formulation, a fiber reinforced composite material was manufactured by a resin transfer molding method. First, on the laminate laminated were Release Ply C (manufactured by AIRTECH) of peel cloth, which is a substrate material provided with a mold release function, and Resin Flow 90HT (manufactured by AIRTECH), which is a resin distribution substrate material. Then, hoses for forming a resin injection port and a resin discharge port were arranged, whole the mold was covered with a nylon bag film, sealed with a sealant tape, and the inside was evacuated. Subsequently, the aluminum plate was heated to 120°C, the pressure in the bag was reduced to 5 torr or less, and then the above-mentioned liquid thermosetting resin (33 parts by mass based on 100 parts by mass of the stitched substrate material) heated to 100°C was injected into the vacuum system through the resin injection port. The injected liquid thermosetting resin filled the bag and was impregnated into the laminate, and under this condition, the temperature was raised to 180°C and kept at 180°C for 2 hours to obtain a fiber reinforced composite material.

The crack density was measured using the obtained fiber reinforced composite material. As a result, almost no crack was generated, and the crack density was as low as 0.12 cracks/(cm ply). The formation of microcracks was confirmed to be suppressed by weaving the stitched fiber-reinforced substrate material using stitching yarn 1.

[Comparative Example 1]

A stitched fiber-reinforced substrate material and a fiber reinforced composite material were obtained in the same manner as in example 1 except that stitching yarn 2 was used as the stitching yarn instead of stitching yarn 1. The crack density was measured using the obtained fiber reinforced composite material. The fiber reinforced composite material obtained in comparative example 1 in which stitching yarns exhibiting a low in-plane shear strength transition rate were used was confirmed to have a significant generation of microcracks, and the crack density of 0.23 cracks/(cm·ply) was high as compared with example 1.

[Citation List]

[Patent Literature]

[PTL 1] Japanese Unexamined Patent Application Publication (Translation of PCT Application) NO. 2012-511450

[Non-patent literature]

[NPL 1] Pierre-Jacques Liotier et al., Composites: Part A 42 (2011), 425-437

**Claims**

1. A stitched fiber-reinforced substrate material formed by stitching reinforcement fiber sheets made of reinforcement fibers using stitching yarns,

   the stitching yarn being a stitching yarn exhibiting an in-plane shear strength transition rate of 5% or more as measured by the method described in the DESCRIPTION,
   wherein the reinforcement fiber sheet is formed by laminating a reinforcement fiber sheet made of unidirectionally drawn and aligned reinforcement fiber layer by layer by altering the fiber axial direction,
   wherein the stitching yarn is a stitching yarn to which an organic compound having a polar group is adhered,
   wherein the polar group is selected from a hydroxy group, an amino group, a phenol group, a lactam group, and an epoxy group.

2. The stitched fiber-reinforced substrate material according to claim 1, wherein the stitching yarn has a linear expansion coefficient in the fiber axial direction of $-1\times10^{-6}$ to $70\times10^{-6}$/K after heated at 180°C for 2 hours and then cooled, as measured by the method described in the DESCRIPTION.

3. A method for manufacturing a stitched fiber-reinforced substrate material, comprising: stitching a reinforcement fiber sheet made of reinforcement fiber using stitching yarns exhibiting an in-plane shear strength transition rate of 5% or more as measured by the method described in the DESCRIPTION,

   wherein the reinforcement fiber sheet is formed by laminating a reinforcement fiber sheet made of unidirectionally drawn and aligned reinforcement fiber layer by layer by altering the fiber axial direction,
   wherein the stitching yarn is a stitching yarn to which an organic compound having a polar group is adhered,
   wherein the polar group is selected from a hydroxy group, an amino group, a phenol group, a lactam group, and an epoxy group.

4. A preform material comprising: the stitched fiber-reinforced substrate material according to claim 1 or claim 2 and a binder resin of 5 to 10 parts by mass with respect to 100 parts by mass of the stitched fiber-reinforced substrate material.

5. A method for manufacturing a preform material comprising: heating the stitched fiber-reinforced substrate material according to claim 1 or claim 2 and a binder resin under pressure.

6. A fiber reinforced composite material comprising: the stitched fiber-reinforced substrate material according to claim 1 or claim 2 and a matrix resin formulation of 20 to 60 parts by mass with respect to 100 parts by mass of the stitched fiber-reinforced substrate material.

7. A method for manufacturing a fiber reinforced composite material comprising: impregnating a matrix resin into the stitched fiber-reinforced substrate material according to claim 1 or claim 2.

**Patentansprüche**

1. Genähtes faserverstärktes Substratmaterial, das durch Vernähen von Verstärkungsfaserlagen aus Verstärkungsfasern unter Verwendung von Nähfäden gebildet ist,

   wobei der Nähfaden ein Nähfaden ist, der eine Übergangsrate der Schubfestigkeit in Lagenebene von mindestens 5% aufweist, die mit dem in der BESCHREIBUNG beschriebenen Verfahren gemessen wird,
   wobei die Verstärkungsfaserlage durch schichtweises Laminieren einer Verstärkungsfaserlage aus unidirektional gezogenen und ausgerichteten Verstärkungsfasern unter Änderung der Faserachsenrichtung gebildet ist,
   wobei der Nähfaden ein Nähfaden ist, an dem eine organische Verbindung mit einer polaren Gruppe befestigt ist, wobei die polare Gruppe ausgewählt ist aus einer Hydroxygruppe, einer Aminogruppe, einer Phenolgruppe, einer Lactamgruppe und einer Epoxygruppe.

2. Genähtes faserverstärktes Substratmaterial nach Anspruch 1, wobei der Nähfaden einen linearen Ausdehnungskoeffizienten in der Faserachsenrichtung von $-1\times10^{-6}$ bis $70\times10^{-6}$/K aufweist, nachdem er 2 Stunden lang bei 180°C erwärmt und dann abgekühlt wurde, wie mit dem in der BESCHREIBUNG beschriebenen Verfahren gemessen wird.

3. Verfahren zum Herstellen eines genähten faserverstärkten Substratmaterials, umfassend: Vernähen einer Verstärkungsfaserlage aus Verstärkungsfasern unter Verwendung von Nähfäden, die eine Übergangsrate der Schubfestigkeit in Lagenebene von mindestens 5% aufweisen, die mit dem in der BESCHREIBUNG beschriebenen Verfahren gemessen wird,

   wobei die Verstärkungsfaserlage durch schichtweises Laminieren einer Verstärkungsfaserlage aus unidirektional gezogenen und ausgerichteten Verstärkungsfasern unter Änderung der Faserachsenrichtung gebildet wird,
   wobei der Nähfaden ein Nähfaden ist, an dem eine organische Verbindung mit einer polaren Gruppe befestigt ist, wobei die polare Gruppe ausgewählt ist aus einer Hydroxygruppe, einer Aminogruppe, einer Phenolgruppe, einer Lactamgruppe und einer Epoxygruppe.

4. Vorformlingmaterial, umfassend: das genähte faserverstärkte Substratmaterial nach Anspruch 1 oder Anspruch 2 und ein Bindemittelharz mit 5 bis 10 Masseteilen bezogen auf 100 Masseteile des genähten faserverstärkten Substratmaterials.

5. Verfahren zum Herstellen eines Vorformlingmaterials, umfassend: Erwärmen des genähten faserverstärkten Substratmaterials nach Anspruch 1 oder Anspruch 2 und eines Bindemittelharzes unter Druck.

6. Faserverstärktes Verbundmaterial, umfassend: das genähte faserverstärkte Substratmaterial nach Anspruch 1 oder Anspruch 2 und eine Matrixharzformulierung mit 20 bis 60 Masseteilen bezogen auf 100 Masseteile des genähten faserverstärkten Substratmaterials.

7. Verfahren zum Herstellen eines faserverstärkten Verbundmaterials, umfassend:
   Tränken des genähten faserverstärkten Substratmaterials nach Anspruch 1 oder Anspruch 2 mit einem Matrixharz.

**Revendications**

1. Matériau de substrat renforcé par des fibres cousu formé par des feuilles de fibres de renforcement de couture composées de fibres de renforcement utilisant des fils de couture,
   le fil de couture étant un fil de couture présentant un taux de transition de force de cisaillement dans le plan de 5 % ou plus tel que mesuré par le procédé décrit dans la DESCRIPTION,

la feuille de fibres de renforcement étant formée par stratification d'une feuille de fibres de renforcement composée d'une fibre de renforcement étirée de manière unidirectionnelle et alignée couche par couche en modifiant la direction axiale de fibre,

le fil de couture étant un fil de couture auquel est collé un composé organique ayant un groupe polaire, le groupe polaire étant choisi parmi un groupe hydroxy, un groupe amino, un groupe phénol, un groupe lactame et un groupe époxy.

2. Matériau de substrat renforcé par des fibres cousu selon la revendication 1, le fil de couture ayant un coefficient d'expansion linéaire dans la direction axiale de fibre de $-1 \times 10^{-6}$ à $70 \times 10^{-6}$/K après avoir été chauffé à 180 °C pendant 2 heures et ensuite refroidi, tel que mesuré par le procédé décrit dans la DESCRIPTION.

3. Procédé pour la fabrication d'un matériau de substrat renforcé par des fibres cousu, comprenant :
la couture d'une feuille de fibres de renforcement composée d'une fibre renforcement utilisant des fils de couture présentant un taux de transition de force de cisaillement dans le plan de 5 % ou plus tel que mesuré par le procédé décrit dans la DESCRIPTION,

la feuille de fibres de renforcement étant formée par stratification d'une feuille de fibres de renforcement composée d'une fibre de renforcement étirée de manière unidirectionnelle et alignée couche par couche en modifiant la direction axiale de fibre,
le fil de couture étant un fil de couture auquel est collé un composé organique ayant un groupe polaire, le groupe polaire étant choisi parmi un groupe hydroxy, un groupe amino, un groupe phénol, un groupe lactame et un groupe époxy.

4. Matériau de préforme comprenant : le matériau de substrat renforcé par des fibres cousu selon la revendication 1 ou la revendication 2 et une résine liante de 5 à 10 parties en masse par rapport à 100 parties en masse du matériau de substrat renforcé par des fibres cousu.

5. Procédé pour la fabrication d'un matériau de préforme comprenant : chauffage du matériau de substrat renforcé par des fibres cousu selon la revendication 1 ou la revendication 2 et d'une résine liante sous pression.

6. Matériau composite renforcé par des fibres comprenant : le matériau de substrat renforcé par des fibres cousu selon la revendication 1 ou la revendication 2 et une formulation de résine de matrice de 20 à 60 parties en masse par rapport à 100 parties en masse du matériau de substrat renforcé par des fibres cousu.

7. Procédé pour la fabrication d'un matériau composite renforcé par des fibres comprenant : imprégnation d'une résine de matrice dans le matériau de substrat renforcé par des fibres cousu selon la revendication 1 ou la revendication 2.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012511450 W

**Non-patent literature cited in the description**

- **PIERRE-JACQUES LIOTIER et al.** *Composites: Part A,* 2011, vol. 42, 425-437